# FASCICULE DE BREVET EUROPEEN

(11) **EP 2 751 186 B1**
(45) Date de publication et mention de la délivrance du brevet: **18.11.2015**
(21) Numéro de dépôt: 12756736.0
(22) Date de dépôt: 11.09.2012
(51) Int. Cl.: B60C 1/00, C08L 7/00, C08L 9/00

(54) **BANDE DE ROULEMENT DE PNEUMATIQUE HORS LA ROUTE**
GELÄNDEREIFEN-LAUFFLÄCHE
OFF-ROAD TYRE TREAD

(30) Priorité: 19.09.2011 FR 1158303
(43) Date de publication de la demande: 09.07.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: JOSEPH, Aurélie, F-63040 Clermont-Ferrand Cedex 9 (FR)
(74) Mandataire: Gandon-Pain, Sylvie
(86) Numéro de dépôt international: PCT/EP2012/067685
(87) Numéro de publication internationale: WO 2013/041400

(56) Documents cités:
- EP-A1- 0 905 185
- DE-A1-102007 044 175
- DATABASE WPI Week 200804 Thomson Scientific, London, GB; AN 2008-A54773 XP002667630, & JP 2007 314649 A (YOKOHAMA RUBBER CO LTD) 6 décembre 2007 (2007-12-06)
- DATABASE WPI Week 201149 Thomson Scientific, London, GB; AN 2011-J34930 XP002667632, & JP 2011 140532 A (SUMITOMO RUBBER IND LTD) 21 juillet 2011 (2011-07-21)

## Description

Le domaine de la présente invention est celui des pneumatiques hors la route, notamment de génie civil, et leurs bandes de roulement. Ces pneumatiques doivent posséder des caractéristiques techniques très différentes des pneumatiques destinés à des véhicules roulant sur route (c'est-à-dire un sol bitumineux), car la nature des sols sur lesquels ils évoluent est très différente, et notamment beaucoup plus agressive, de par sa nature caillouteuse. Par ailleurs, contrairement à des pneumatiques de tourisme par exemple, surtout pour les gros engins de génie civil, les pneumatiques doivent pouvoir supporter une charge qui peut être extrêmement lourde. Par conséquent, les solutions connues pour les pneumatiques roulant sur sol bitumineux ne sont pas directement applicables à des pneumatiques hors la route tels que des pneumatiques génie civil.

Aujourd'hui, la bande de roulement des pneumatiques hors la route inclut généralement du caoutchouc naturel, une charge renforçante de type noir de carbone et des additifs usuellement utilisés pour ces pneumatiques. Les manufacturiers de pneumatiques hors la route cherchent à améliorer la résistance à l'usure de ces pneumatiques et donc leur durée de vie, sans entrainer d'augmentation de l'hystérèse. Il est possible d'utiliser des élastomères synthétiques en remplacement du caoutchouc naturel. De tels élastomères synthétiques entrainent une augmentation de la rigidité de la composition de la bande de roulement du pneumatique qui s'accompagne malheureusement généralement pour les pneumatiques roulant sur un sol non bitumineux, ou mou, du type de ceux rencontrés sur le lieux de travail des engins de génie civil, d'une augmentation de l'hystérèse et donc de la température interne du pneumatique en cours de travail. L'utilisation d'élastomères synthétiques dans les compositions de bandes de roulement de pneumatiques hors la route est donc limitée par l'augmentation de l'hystérèse, notamment dans le cas des pneumatiques de grandes dimensions.

Une augmentation de la rigidité de la composition de la bande de roulement du pneumatique pourrait également être obtenue par l'utilisation de charges renforçantes plus fines ou en augmentant le taux de charges renforçantes. Malheureusement cette solution engendre, en particulier pour les pneumatiques hors la route de très grandes dimensions, une augmentation de l'hystérèse, et ne permet donc pas de résoudre le problème exposé ci-dessus.

Suite à leurs recherches, les demanderesses ont trouvé qu'une composition spécifique pour la bande de roulement des pneumatiques hors la route permet de résoudre ce problème et d'obtenir une résistance à l'usure améliorée sans pénalisation de l'hystérèse.

Ainsi, l'invention concerne une bande de roulement de pneumatique hors la route comprenant une composition à base d'au moins une charge, d'un système de réticulation, de 50 à 80 parties en poids pour cent parties en poids d'élastomère (pce) d'au moins un élastomère isoprénique, et de 20 à 50 pce d'au moins un polybutadiène à fort taux de vinyle, comportant sur la base du polybutadiène un taux de vinyle compris entre 50 et 100 %, le taux total d'élastomère isoprénique et de polybutadiène à fort taux de vinyle étant compris dans un domaine variant de 85 à 100 pce.

Préférentiellement, l'invention concerne une bande de roulement telle que définie ci-dessus dans laquelle le polybutadiène à fort taux de vinyle comporte un taux de vinyle compris dans un domaine allant de 55 à 95 %, plus préférentiellement de 60 à 90 %.

Préférentiellement également, l'invention concerne une bande de roulement telle que définie ci-dessus dans laquelle le taux total d'élastomère isoprénique et de polybutadiène à fort taux de vinyle est compris dans un domaine variant de 90 à 100 pce, de préférence de 95 à 100 pce et plus préférentiellement de 100 pce.

De préférence, l'invention concerne une bande de roulement telle que définie ci-dessus dans laquelle le taux d'élastomère isoprénique est compris dans un domaine allant de 50 à 70 pce.

Préférentiellement, l'invention concerne une bande de roulement telle que définie ci-dessus dans laquelle l'élastomère isoprénique comprend majoritairement du caoutchouc naturel.

Alternativement, l'invention concerne une bande de roulement telle que définie ci-dessus dans laquelle l'élastomère isoprénique comprend majoritairement du polyisoprène de synthèse.

De manière préférentielle, l'invention concerne une bande de roulement telle que définie ci-dessus dans laquelle le taux de polybutadiène à fort taux de vinyle est compris dans un domaine allant de 30 à 50 pce.

Plus préférentiellement l'invention concerne une bande de roulement telle que définie ci-dessus dans laquelle la charge est une charge renforçante choisie parmi le noir de carbone, la silice et leurs mélanges ; de préférence à un taux compris dans un domaine variant de 30 à 90 pce, de préférence de 30 à 80 pce.

Préférentiellement également, l'invention concerne une bande de roulement telle que définie ci-dessus comprenant en outre une charge non renforçante, qui peut de préférence être choisie parmi la craie, le graphite, les écailles de verre ou des charges lamellaires à base de silicium telles que les smectites, le kaolin, le talc, le mica, les montmorillonites, la vermiculite, la silice non liée et un mélange de ces derniers.

De manière plus préférentielle, l'invention concerne une bande de roulement telle que définie ci-dessus dans laquelle la charge non renforçante est de la silice non liée.

Préférentiellement l'invention concerne une bande de roulement telle que définie ci-dessus dans laquelle le taux de charge non renforçante est compris dans un domaine allant de 2 à 35 pce, de préférence de 3 à 25 pce.

L'invention concerne également un pneumatique hors la route comportant une bande de roulement telle que décrite précédemment, et préférentiellement, il s'agit d'un pneumatique de génie civil.

### I- Description de l'invention

L'objet de l'invention concerne donc une bande de roulement de pneumatique hors la route comprenant une composition à base d'au moins une (c'est-à-dire une ou plusieurs) charge, d'un système de réticulation, de 50 à 80 parties en poids pour cent parties en poids d'élastomère (pce) d'au moins un élastomère isoprénique (c'est-à-dire un ou plusieurs, le taux indiqué étant le taux total si la composition comprend plusieurs élastomères isopréniques), et de 20 à 50 pce d'au moins un polybutadiène à fort taux de vinyle (c'est-à-dire un ou plusieurs, le taux indiqué étant le taux total si la composition comprend plusieurs de ces polybutadiènes), le taux total d'élastomère isoprénique et de polybutadiène à fort taux de vinyle étant compris dans un domaine variant de 85 à 100 pce.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

D'une manière équivalente, l'invention concerne préférentiellement une composition telle que définie ci-dessus, dans laquelle la composition est à l'état non réticulé ou à l'état réticulé.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Selon la présente invention le pneumatique hors la route désigne un pneumatique destiné à équiper, notamment pour engins de travaux de génie civil portant de très lourdes charges. Ces engins peuvent être des engins de chantiers, des camions benne (en anglais « dumpers »), des engins de mines à ciel ouvert ou souterraines. Ces pneumatiques ont habituellement des diamètres pouvant varier de 1 à 4 mètres, et sont gonflés à une pression de travail supérieure à 4 bars, notamment supérieure à 6 bars, par exemple de 4 à 10 bars. Les engins de travaux de génie civil sont équipés de pneus qui sont en règle générale soumis à des charges très importantes et à de fortes variations de charge. Ces pneumatiques sont pourvus de bandes de roulement qui présentent, par rapport aux épaisseurs des bandes de roulement des autres types de pneus, comme par exemple les pneus pour véhicules poids lourd, de grandes épaisseurs de matériau caoutchoutique. Par grande épaisseur, on entend ici une épaisseur supérieure à 30 mm et pouvant aller jusqu'à une valeur de 120 mm. En conséquence, l'effet des cycles de roulage et des cycles de variations de charge supportée induisent dans les bandes de roulement de ces pneumatiques des températures élevées notamment dans la partie centrale des bandes de roulement.

### I-1 Elastomère ou caoutchouc

De façon usuelle, on utilise indifféremment dans le texte les termes « élastomère » et « caoutchouc » qui sont interchangeables.

La bande de roulement de pneumatique selon l'invention comprend à titre d'élastomère majoritaire, à un taux compris dans un domaine allant de 50 à 80 pce et de préférence de 50 à 70 pce, au moins un (c'est-à-dire un ou plusieurs) élastomère isoprénique, naturel (caoutchouc naturel, NR), synthétique (IR), ou un mélange des deux. Les élastomères isopréniques sont bien connus de l'homme du métier. Selon un mode de réalisation, préférentiel, l'élastomère isoprénique comprend majoritairement (c'est-à-dire plus de 50% massique) du caoutchouc naturel, et préférentiellement uniquement du caoutchouc naturel. Selon un autre mode de réalisation, l'élastomère isoprénique comprend majoritairement du polyisoprène de synthèse et préférentiellement uniquement de polyisoprène synthétique.

En complément du ou des élastomère(s) isoprénique(s), c'est-à-dire à un taux compris dans un domaine allant de 20 à 50 pce, la bande de roulement du pneumatique selon l'invention comprend également un polybutadiène à fort taux de vinyle. De préférence, le taux de polybutadiène à fort taux de vinyle est compris dans un domaine allant de 30 à 50 pce. Par polybutadiène à fort taux de vinyle, on entend tout polybutadiène ayant une teneur (% molaire) en unités dites «unités -1,2 » (ou unités vinyles) comprise entre 50 et 100%, préférentiellement comprise dans un domaine allant de 55 à 95%, plus préférentiellement de 60 à 90% et en particulier ceux ayant une teneur (% molaire) en unités -1,2 comprise entre 65 et 85%. Préférentiellement également pour les besoins de l'invention, on choisira un polybutadiène ayant un taux de vinyle supérieur à 60%, préférentiellement supérieur à 65% et notamment compris dans un domaine allant de 70 à 90%. De tels polybutadiènes sont connus de l'homme de l'art et ont été décrits dans le document GB-1166832 par exemple. Les polybutadiène à fort taux de vinyle utiles pour les besoins l'invention peuvent comporter à titre de résidus de synthèse une faible quantité de monomères autres que du butadiène, comme par exemple du styrène. Ces résidus dus au procédé de fabrication, s'ils sont présents, ne dépassent pas une quantité maximale de 10% (de préférence 5 % et plus préférentiellement 3%) au sein du polybutadiène à fort taux de vinyle tel que décrit ci-dessus.

Le taux total d'élastomère isoprénique et de polybutadiène à fort taux de vinyle est compris dans un domaine variant de 85 à 100 pce, de préférence de 90 à 100 pce et plus préférentiellement de 95 à 100 pce. En particulier, la composition peut préférentiellement ne contenir que du ou des élastomère(s) isoprénique(s) et du polybutadiène à fort taux de vinyle.

Lorsqu'un élastomère supplémentaire est présent dans la composition du pneumatique de l'invention, cet élastomère peut être choisi parmi tous les élastomères connus de l'homme du métier. A titre d'exemple, l'élastomère supplémentaire peut être un caoutchouc diénique du type de ceux couramment utilisés en pneumatiques tel que par exemple le polybutadiène, les copolymères de styrène et de butadiène et autres.

Lorsqu'un élastomère supplémentaire est présent dans la composition, son taux est au plus de 15 pce, préférentiellement au plus 10 pce et plus préférentiellement au plus 5 pce. De manière plus préférentielle, la composition ne comporte pas d'élastomère supplémentaire.

### I-2 Charge

On peut utiliser tout type de charge dans les formulations de bandes de roulement de pneumatiques selon l'invention, telles que des charges renforçantes ou non renforçantes. Parmi les charges renforçantes connues pour leurs capacités à renforcer une composition de caoutchouc utilisable pour la fabrication de pneumatiques, on peut citer par exemple une charge organique tel que du noir de carbone, une charge inorganique renforçante telle que de la silice en présence d'un agent de couplage, ou encore un coupage de ces deux types de charge, notamment un coupage de noir de carbone et de silice.

Tous les noirs de carbone conviennent, notamment les noirs du type HAF, ISAF, SAF conventionnellement utilisés dans les pneumatiques (noirs dits de grade pneumatique). Parmi ces derniers, on citera plus particulièrement les noirs de carbone renforçants tels que les noirs des séries 100 ou 200 (grades ASTM), comme par exemple les noirs N115, N134, N220, ou N234, ou encore, selon les applications visées, les noirs de séries plus élevées de 300 à 900 (par exemple N326, N330, N339, N347, N375, N550, N650, N660, N683, N772, N990). Les noirs de carbone pourraient être par exemple déjà incorporés à l'élastomère sous la forme d'un masterbatch (voir par exemple demandes WO 97/36724 ou WO 99/16600). Pour les besoins de l'invention, on préfère les noirs dits « fins » tels que par exemple les noirs N115, N134, N220, ou N234.

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale quelles que soient sa couleur et son origine (naturelle ou de synthèse), encore appelée charge "blanche", charge "claire" voire "charge non noire" ("*non-black filler*") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. On peut citer comme exemple de silice utile pour les besoins de l'invention la silice « Ultrasil VN3SP » commercialisée par la société Evonik. A titres de silices précipitées hautement dispersibles (dites "HDS"), on citera par exemple les silices « Ultrasil 7000 » et « Ultrasil 7005 » de la société Degussa, les silices « Zeosil 1165MP », « 1135MP » et « 1115MP » de la société Rhodia, la silice « Hi-Sil EZ150G » de la société PPG, les silices « Zeopol 8715 », « 8745 » et « 8755 » de la Société Huber, les silices à haute surface spécifique telles que décrites dans la demande WO 03/16837.

Lorsque de la silice est utilisée comme charge renforçante dans la composition, on peut utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

Lorsque les compositions de caoutchouc conformes à l'invention contiennent des agents de couplage, de manière connue, leur taux est ajusté selon le taux de silice, il est préférentiellement compris dans un domaine allant de 0,1 à 10 pce, plus préférentiellement de 0,2 à 8 et plus préférentiellement encore de 0,5 à 5 pce.

L'homme du métier comprend qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

L'homme du métier sait adapter en fonction d'une part de la surface spécifique de la charge renforçante et d'autre part selon les applications particulières visées, le taux total de charge renforçante totale (noir de carbone et charge inorganique renforçante telle que silice). De manière préférentielle, ce taux est compris dans un domaine allant de 30 à 90 pce, préférentiellement de 30 à 80 pce, plus préférentiellement de 35 à 70 pce. Selon un mode particulier, la charge renforçante contient majoritairement en poids du noir de carbone, c'est-à-dire qu'il représente le plus fort taux en pce parmi les charges renforçantes de la composition, préférentiellement, le noir de carbone représente plus de 50% de la charge renforçante, par exemple à un taux compris dans un domaine variant de 30 à 90 pce, préférentiellement de 30 à 80 pce, plus préférentiellement de 35 à 70 pce.

De manière optionnelle, les compositions de l'invention peuvent également comprendre une charge inerte, ou non renforçante. A la différence des charges renforçante, de taille nanométrique, les charges non renforçante sont généralement de taille micrométrique, ce sont des microparticules. Par exemple, ces charges inertes peuvent être choisies parmi les charges lamellaires ou non telles que la craie, le graphite, les écailles de verre ou des charges lamellaires à base de silicium telles que les smectites, le kaolin, le talc, le mica, les montmorillonites et la vermiculite, ou un mélange de ces derniers.

Sont également considérées comme charges non renforçantes, les charges nanométriques qui ne se lient pas à la matrice élastomérique, telle que la silice en l'absence d'agent de couplage ; on parle alors de « silice non liée ». Préférentiellement dans les compositions bandes de roulement des pneumatiques selon l'invention, on trouve comme charge dite « non renforçante » de la silice non liée. Cette silice non liée peut être utilisée avec un agent de recouvrement, différent d'un agent de couplage, tel que par exemple un polyéthylène glycol (PEG), bien connu de l'homme de l'art.

Lorsque des charge de type non renforçantes sont présentes dans la composition, leur taux total peut préférentiellement varier de 2 pce à 35 pce, de préférence de 3 à 25 pce, et notamment de 5 à 20 pce.

Ainsi par exemple la composition peut contenir de la silice à titre de charge renforçante et/ou non renforçante selon la présence et la quantité d'agent de couplage. Par exemple, une partie de la silice présente peut être renforçante lorsqu'elle est liée à l'élastomère par un agent de couplage, et une autre partie de la silice peut être non renforçante lorsqu'elle n'est pas liée à l'élastomère par un agent de couplage.

### I-3 Système de réticulation

On entend par système de réticulation l'agent chimique (ou les agents chimiques) introduit au cours de la phase dite « productive » de la préparation des compositions (voir paragraphe sur la préparation des compositions). Cet agent chimique permet aux chaînes élastomériques de se lier entre elles en formant un réseau tridimensionnel, c'est le phénomène de la réticulation.

Habituellement, pour la réticulation des compositions de bandes de roulement de pneumatiques, on utilise du soufre ou un agent donneur de soufre et d'un accélérateur primaire de vulcanisation, on parle alors de vulcanisation. Le soufre ou agent donneur de soufre est utilisé à un taux préférentiel compris entre 0,5 et 10 pce, plus préférentiellement compris entre 0,5 et 5,0 pce, par exemple entre 0,5 et 3,0 pce. L'accélérateur primaire de vulcanisation est utilisé à un taux préférentiel compris entre 0,2 et 10 pce, plus préférentiellement compris entre 0,3 et 6,0 pce. A ce système de vulcanisation viennent optionnellement s'ajouter, divers accélérateurs secondaires ou activateurs de vulcanisation connus, préférentiellement pour 0,5 à 5,0 pce chacun.

On peut utiliser des accélérateurs du type thiazoles ainsi que leurs dérivés, des accélérateurs de types thiurames, carbamates, sulfénamides. Ces accélérateurs sont par exemple choisis dans le groupe constitué par le disulfure de 2-mercaptobenzothiazyle (en abrégé "MBTS"), le disulfure de tetrabenzylthiurame (TBzTD), le N-cyclohexyl-2-benzothiazyle sulfénamide (CBS), le N,N-dicyclohexyl-2-benzothiazyle sulfénamide (DCBS), le N-ter-butyl-2-benzothiazyle sulfénamide (TBBS), le N-ter-butyl-2-benzothiazyle sulfénimide (TBSI), le dibenzyldithiocarbamate de zinc (ZBEC) et les mélanges de ces composés. Parmi les accélérateurs/ activateurs de vulcanisation, citons également les acides gras tels que l'acide stéarique, ou les dérivés guanidiques (en particulier la diphénylguanidine).

### I-4 Additifs divers

Les compositions de bande de roulement conformes à l'invention peuvent comporter également tout ou partie des additifs usuels habituellement utilisés dans les compositions d'élastomères destinées à la fabrication de pneumatiques, en particulier de couches d'étanchéité, comme par exemple des agents de protection tels que cires anti-ozone, des anti-ozonants chimiques, des anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269. Par exemple, les compositions peuvent contenir des agents de protection tels que de la cire paraffine et/ou de la N-1,3-diméthylbutyl-N-phénylparaphenylènediamine (6-PPD).

Les compositions de bande de roulement selon l'invention peuvent en outre comporter un agent plastifiant du type de ceux usuellement utilisés, tels que les huiles ou les résines. De préférence, ces compositions de bande de roulement comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

Ces compositions peuvent également contenir, en complément des agents de couplage, des activateurs de couplage, des agents de recouvrement de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des aminés primaires, secondaires ou tertiaires (par exemple des trialcanol-amines), des POS hydroxylés ou hydrolysables, par exemple des α,ω -dihydroxy-polyorganosiloxanes (notamment des α,ω-dihydroxy-polydiméthylsiloxanes), des acides gras comme par exemple l'acide stéarique.

### II- Préparation des compositions

Les compositions sont fabriquées dans des mélangeurs appropriés, en utilisant deux phases de préparation successives bien connues de l'homme du métier : une première phase de travail ou malaxage thermomécanique (dite phase « non productive ») à haute température, jusqu'à une température maximale comprise entre 110°C et 190°C, de préférence entre 130°C et 180°C suivie d'une seconde phase de travail mécanique (dite phase « productive ») jusqu'à une plus basse température, typiquement inférieure à 110°C, par exemple entre 40°C et 100°C, phase de finition au cours de laquelle est incorporé le système de réticulation.

Le procédé pour préparer une composition de bande de roulement de pneumatiques hors la route, comporte les étapes suivantes :
- incorporer aux élastomères, au cours d'une première étape, au moins une charge, en malaxant thermomécaniquement le tout, en une ou plusieurs fois, jusqu'à atteindre une température maximale comprise entre 110°C et 190°C ; (cette phase de préparation est appelée phase « non-productive »).
- incorporer ensuite, au cours d'une seconde étape, le système de réticulation et malaxer le tout jusqu'à une température maximale inférieure à 110°C (cette phase de préparation est appelée phase « productive »).

Ces deux étapes peuvent être réalisées de manière consécutive sur un même mélangeur ou être séparée par une étape de refroidissement à une température inférieure à 100°C, la dernière étape étant alors réalisée sur un deuxième mélangeur.

A titre d'exemple, la phase non productive est conduite en une seule étape thermomécanique au cours de laquelle on introduit, dans un mélangeur approprié tel qu'un mélangeur interne usuel, dans un premier temps tous les constituants de base nécessaires (élastomère, charge et agents de mise en oeuvre éventuels), puis dans un deuxième temps, par exemple après une à deux minutes de malaxage, les autres additifs, éventuels agents de recouvrement ou de mise en oeuvre complémentaires, à l'exception du système de réticulation. Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme bande de roulement de pneumatique génie civil.

La réticulation (ou vulcanisation, ou cuisson) est conduite à une température généralement comprise entre 110°C et 200°C, pendant un temps suffisant qui peut varier par exemple entre 5 et 500 min en fonction notamment de la température de cuisson, du système de vulcanisation adopté et de la cinétique de réticulation de la composition considérée.

L'invention concerne les couches de caoutchouc précédemment décrites tant à l'état dit "cru" (i.e. avant cuisson) qu'à l'état dit "cuit" ou vulcanisé (i.e. après vulcanisation).

L'invention concerne également le procédé de préparation tel que décrit ci-dessus. L'invention concerne préférentiellement un procédé tel que défini ci-dessus, dans lequel ente le malaxage thermomécanique et l'incorporation du système de réticulation, on procède au refroidissement de l'ensemble à une température inférieure ou égale à 100°C.

### III- Exemples

### III-1 Caractérisation des compositions de caoutchouterie

### Propriétés dynamiques en cisaillement

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm de hauteur et de 400 mm² de section), soumis à une sollicitation sinusoïdale en cisaillement simple alterné, à la fréquence de 10Hz, à 60°C et à 100°C. On effectue un balayage en amplitude de déformation de 0,1 % à 100% (cycle aller), puis de 100% à 0,1% (cycle retour). Les résultats exploités sont le module complexe de cisaillement dynamique G* et le facteur de perte tan(8). Sur le cycle retour, on enregistre la valeur du G* à 50% de déformation ainsi que le facteur de perte, noté tan(δ)ₘₐₓ.

Pour plus de lisibilité les résultats seront indiqués en base 100, la valeur 100 étant attribuée au témoin. Un résultat inférieur à 100 indiquant une diminution de la valeur concernée, et inversement, un résultat supérieur à 100, indiquera une augmentation de la valeur concernée.

### III-2 Exemples de compositions

Les exemples présentés ci-après sont préparés comme indiqué ci-dessus, leur composition est donnée dans le tableau 1, en pce.

**Tableau 1**

| Composition | C1 | C2 |
|---|---|---|
| NR (1) | 100 | 60 |
| HVBR (2) | 0 | 40 |
| Silice (3) | 15 | 15 |
| Noir de carbone (4) | 40 | 40 |
| Antioxydant (5) | 1,5 | 1,5 |
| Agent de mise en oeuvre (6) | 2 | 2 |
| ZnO | 3 | 3 |
| Acide stéarique | 1 | 1 |
| Soufre | 1,9 | 1,9 |
| Accélérateur | 1,2 | 1,2 |

| | | |
|---|---|---|
| (1) Caoutchouc naturel (2) Polyisobutylène à fort taux de vinyle (taux de vinyle de 75%) « Europrene BR HV 80 » commercialisé par la société Polimeri Europa (3) Silice « Ultrasil VN3SP » commercialisée par la société Evonik (4) N115 commercialisé par la société Cabot corporation (5) N-1,3-diméthylbutyl-N-phénylparaphenylènediamine, « Santoflex 6-PPD » de la société Flexsys (6) Polyéthylèneglycol « CARBOWAX 8000 » de la société Dow Corning | | |

La composition C1 est la composition témoin, elle comporte uniquement du caoutchouc naturel. La composition C2, conforme à l'invention, comporte un coupage de caoutchouc naturel et de polybutadiène à fort taux de vinyle. Elles varient donc entre elles par la nature des élastomères.

### III-3 Propriétés des compositions

Les propriétés des compositions présentées ci-dessus sont présentées dans le tableau 2 ci-dessous.

**Tableau 2**

| Composition | C1 | C02 |
|---|---|---|
| G* à 50% à 100°C Base 100 | 100 | 131 |
| tan(δ)ₘₐₓ à 100°C Base 100 | 100 | 94 |
| G* à 50% à 60°C Base 100 | 100 | 125 |
| tan(δ)ₘₐₓ à 60°C Base 100 | 100 | 100 |

La comparaison des compositions C1 et C2, montre que la composition C2 possède une rigidité augmentée de plus de 20% (G* à 50% à 60°C et 100°C) sans augmentation notable de l'hystérèse (tan(δ) à 60°C et 100°C).

Ainsi, grâce à la composition des bandes de roulement des pneumatiques selon l'invention, il est possible d'améliorer la résistance à l'usure sans pénaliser l'hystérèse.

## Revendications

1. Bande de roulement de pneumatique hors la route comprenant une composition à base d'au moins une charge, d'un système de réticulation, de 50 à 80 parties en poids pour cent parties en poids d'élastomère (pce) d'au moins un élastomère isoprénique, et de 20 à 50 pce d'au moins un polybutadiène à fort taux de vinyle, comportant sur la base du polybutadiène un taux de vinyle compris entre 50 et 100 %, le taux total d'élastomère isoprénique et de polybutadiène à fort taux de vinyle étant compris dans un domaine variant de 85 à 100 pce.

2. Bande de roulement selon la revendication 1 dans laquelle le polybutadiène à fort taux de vinyle comporte un taux de vinyle compris dans un domaine allant de 55 à 95 %, avantageusement compris dans un domaine allant de 60 à 90 %.

3. Bande de roulement selon l'une quelconque des revendications 1 à 2 dans laquelle le taux total d'élastomère isoprénique et de polybutadiène à fort taux de vinyle est compris dans un domaine variant de 90 à 100 pce, de préférence de 95 à 100 pce.

4. Bande de roulement selon l'une quelconque des revendications 1 à 3 dans laquelle le taux total d'élastomère isoprénique et de polybutadiène à fort taux de vinyle est de 100 pce.

5. Bande de roulement selon l'une quelconque des revendications 1 à 4 dans laquelle le taux d'élastomère isoprénique est compris dans un domaine allant de 50 à 70 pce.

6. Bande de roulement selon l'une quelconque des revendications 1 à 5 dans laquelle l'élastomère isoprénique comprend majoritairement du caoutchouc naturel.

7. Bande de roulement selon l'une quelconque des revendications 1 à 5 dans laquelle l'élastomère isoprénique comprend majoritairement du polyisoprène de synthèse.

8. Bande de roulement selon l'une quelconque des revendications 1 à 7 dans laquelle le taux de polybutadiène à fort taux de vinyle est compris dans un domaine allant de 30 à 50 pce.

9. Bande de roulement selon l'une quelconque des revendications 1 à 8 dans laquelle la charge est une charge renforçante choisie parmi le noir de carbone, la silice et leurs mélanges.

10. Bande de roulement selon l'une quelconque des revendications 1 à 9 dans laquelle le taux de charge renforçante est compris dans un domaine variant de 30 à 90 pce, de préférence de 30 à 80 pce.

11. Bande de roulement selon l'une quelconque des revendications 1 à 10 comprenant en outre une charge non renforçante, avantageusement choisie parmi la craie, le graphite, les écailles de verre ou des charges lamellaires à base de silicium telles que les smectites, le kaolin, le talc, le mica, les montmorillonites, la vermiculite, la silice non liée et un mélange de ces derniers.

12. Bande de roulement selon la revendication 11 dans laquelle la charge non renforçante est de la silice non liée.

13. Bande de roulement selon l'une des revendications 11 à 12 dans laquelle le taux de charge non renforçante est compris dans un domaine allant de 2 à 35 pce, de préférence de 3 à 25 pce.

14. Pneumatique hors la route comportant une bande de roulement selon l'une des revendications précédentes.

15. Pneumatique selon la revendication 14 **caractérisé en ce qu'**il s'agit d'un pneumatique de génie civil.

## Patentansprüche

1. Lauffläche eines Geländereifens, umfassend eine Zusammensetzung auf Basis mindestens eines Füllstoffes, eines Vernetzungssystems, 50 bis 80 Gewichtsteilen auf hundert Elastomergewichtsteile (pce) mindestens eines Isoprenelastomers, 20 bis 50 pce mindestens eines Polybutadiens mit starkem Vinylanteil, umfassend auf Basis des Polybutadiens einen Vinylanteil zwischen 50 und 100 %, wobei der Gesamtanteil an Isoprenelastomer und Polybutadien mit starkem Vinylanteil in einem Bereich zwischen 85 und 100 pce liegt.

2. Lauffläche nach Anspruch 1, bei der das Polybutadien mit starkem Vinylanteil einen Vinylanteil in einem Bereich zwischen 55 und 95 %, vorteilhafterweise in einem Bereich zwischen 60 und 90 % umfasst.

3. Lauffläche nach einem der Ansprüche 1 bis 2, bei der der Gesamtanteil an Isoprenelastomer und Polybutadien mit starkem Vinylanteil in einem Bereich zwischen 90 und 100 pce, vorzugsweise zwischen 95 und 100 pce, liegt.

4. Lauffläche nach einem der Ansprüche 1 bis 3, bei der der Gesamtanteil an Isoprenelastomer und Polybutadien mit starkem Vinylanteil 100 pce beträgt.

5. Lauffläche nach einem der Ansprüche 1 bis 4, bei der der Anteil an Isoprenelastomer in einem Bereich zwischen 50 und 70 pce liegt.

6. Lauffläche nach einem der Ansprüche 1 bis 5, bei der das Isoprenelastomer mehrheitlich Naturkautschuk umfasst.

7. Lauffläche nach einem der Ansprüche 1 bis 5, bei der das Isoprenelastomer mehrheitlich Synthesepolyisopren umfasst.

8. Lauffläche nach einem der Ansprüche 1 bis 7, bei der der Anteil an Polybutadien mit starkem Vinylanteil in einem Beriech zwischen 30 und 50 pce liegt.

9. Lauffläche nach einem der Ansprüche 1 bis 8, bei der der Füllstoff ein verstärkender Füllstoff ist, der unter Rußschwarz, Siliziumoxid und ihren Gemischen ausgewählt ist.

10. Lauffläche nach einem der Ansprüche 1 bis 9, bei der der Anteil an verstärkendem Füllstoff in einem Bereich zwischen 30 und 90 pce, vorzugsweise zwischen 30 und 80 pce, liegt.

11. Lauffläche nach einem der Ansprüche 1 bis 10, ferner umfassend einen nicht verstärkenden Füllstoff, der vorteilhafterweise unter Kreide, Graphit, Glasplättchen oder lamellaren Füllstoffen auf Basis von Siliziumoxid, wie Smektiten, Kaolin, Talk, Glimmer, Montmorilloniten, Vermikulit, nicht gebundenem Siliziumoxid und einem Gemisch aus diesen letztgenannten ausgewählt ist.

12. Lauffläche nach Anspruch 11, bei der der nicht verstärkende Füllstoff nicht gebundenes Siliziumoxid ist.

13. Lauffläche nach einem der Ansprüche 11 bis 12, bei der der Anteil an nicht verstärkendem Füllstoff in einem Bereich zwischen 2 und 35 pce, vorzugsweise zwischen 3 und 25 pce, liegt.

14. Geländereifen, umfassend eine Lauffläche nach einem der vorhergehenden Ansprüche.

15. Reifen nach Anspruch 14, **dadurch gekennzeichnet, dass** es sich um einen Nutzfahrzeug-Reifen handelt.

## Claims

1. Off-road tyre tread comprising a composition based on at least one filler, a crosslinking system, from 50 to 80 parts by weight, per hundred parts by weight of elastomer (phr), of at least one isoprene elastomer and from 20 to 50 phr of at least one polybutadiene having a high vinyl content comprising, on the basis of the polybutadiene, a vinyl content of between 50% and 100%, the total content of isoprene elastomer and of polybutadiene having a high vinyl content being within a range varying from 85 to 100 phr.

2. Tread according to Claim 1, in which the polybutadiene having a high vinyl content comprises a vinyl content within a range extending from 55% to 95%, advantageously within a range extending from 60% to 90%.

3. Tread according to either one of Claims 1 and 2, in which the total content of isoprene elastomer and of polybutadiene having a high vinyl content is within a range varying from 90 to 100 phr, preferably from 95 to 100 phr.

4. Tread according to any one of Claims 1 to 3, in which the total content of isoprene elastomer and of polybutadiene having a high vinyl content is 100 phr.

5. Tread according to any one of Claims 1 to 4, in which the content of isoprene elastomer is within a range extending from 50 to 70 phr.

6. Tread according to any one of Claims 1 to 5, in which the isoprene elastomer predominantly comprises natural rubber.

7. Tread according to any one of Claims 1 to 5, in which the isoprene elastomer predominantly comprises synthetic polyisoprene.

8. Tread according to any one of Claims 1 to 7, in which the content of polybutadiene having a high vinyl content is within a range extending from 30 to 50 phr.

9. Tread according to any one of Claims 1 to 8, in which the filler is a reinforcing filler chosen from carbon black, silica and their mixtures.

10. Tread according to any one of Claims 1 to 9, in which the content of reinforcing filler is within a range varying from 30 to 90 phr, preferably from 30 to 80 phr.

11. Tread according to any one of Claims 1 to 10, additionally comprising a non-reinforcing filler advantageously chosen from chalk, graphite, glass flakes or silicon-based lamellar fillers, such as smectites, kaolin, talc, mica, montmorillonites, vermiculite, non-bonded silica and a mixture of the latter.

12. Tread according to Claim 11, in which the non-reinforcing filler is non-bonded silica.

13. Tread according to either of Claims 11 and 12, in which the content of non-reinforcing filler is within a range extending from 2 to 35 phr, preferably from 3 to 25 phr.

14. Off-road tyre comprising a tread according to one of the preceding claims.

15. Tyre according to Claim 14, **characterized in that** it is a civil engineering tyre.
